# EUROPEAN PATENT SPECIFICATION

(11) **EP 1 991 477 B1**
(45) Date of publication and mention of the grant of the patent: **20.07.2011**
(21) Application number: 07703566.5
(22) Date of filing: 27.02.2007
(51) Int. Cl.: B65D 85/804, A47J 31/40

(54) **BEVERAGE-INGREDIENT CAPSULE AND CAPSULE-BASED BEVERAGE PRODUCTION METHOD**
GETRÄNKEBESTANDTEILKAPSEL UND AUF KAPSELN BASIERENDES GETRÄNKEHERSTELLUNGSVERFAHREN
CAPSULE D'INGREDIENT POUR BOISSON ET PROCEDE DE PRODUCTION DE BOISSON BASE SUR DES CAPSULES

(30) Priority: 27.02.2006 EP 06003975
(43) Date of publication of application: 19.11.2008
(73) Proprietor: Nestec S.A., 1800 Vevey (CH)
(72) Inventor: JARISCH, Christian, 1094 Paudex (CH); DENISART, Jean-Luc, 1096 Cully (CH); DENISART Jean-Paul, 1093 La Conversion (CH); COLANTONIO, Jean-Luc, 1470 Estavayer-le-Lac (CH)
(74) Representative: Borne, Patrice Daniel
(86) International application number: PCT/EP2007/001684
(87) International publication number: WO 2007/096196

(56) References cited:
- EP-A- 1 398 279
- WO-A-2004/078009
- WO-A-2005/066040
- WO-A-2006/005755
- US-A- 2 778 739

## Description

The present invention relates to beverage production devices designed for producing a beverage or liquid comestible by injecting a liquid into an ingredient-containing capsule.

The invention also relates to methods for producing a beverage from an ingredient-containing capsule.
An example of a beverage production device and a method for producing a beverage is disclosed in WO 2006/05755.

Certain beverage systems using beverage-ingredient containing capsules are popular for the quality of the beverage delivered and the convenience and ease of preparation. A typical example is the production of coffee by using a sealed, ground coffee-powder containing capsule in combination with a matching coffee machine.

The invention especially relates to the use of capsules which are filled with the ingredient and then sealed at the manufacturing site. Such capsules can then be inserted into the beverage production machine (e.g. the coffee machine) without the necessity that the user has to open manually at least one face of the capsule. According to this known technology the opening of an inlet side and an outlet (draining) side of the capsule is carried out by dedicated elements of the machine itself after the insertion of the capsule into the beverage-producing machine.

Several examples are known for technologies in which mechanical perforating means penetrate into the inlet side and the outlet side of the capsule to create such inlet and draining openings.

Other examples use active mechanical perforation means for the opening of the capsule at the inlet side only. Once the inlet side is opened, water under pressure is injected into the capsule and the pressure inside the capsule increases until the inner pressure causes the outlet side of the capsule to open, perforate or rupture. The opening of the draining side of the capsule can be assisted by pressing the outlet side of the capsule e.g. against dedicated mechanical opening means.

WO 2005/066040 A2 teaches a capsule and a method for the preparation of beverages in which the wall of the sealed capsule comprises a first weakened area suitable to be perforated buy a pressurized liquid acting upon the outside of said capsule, and a second area suitable to be caused to break through the effect of the pressure exerted thereupon by the beverage present with in the capsule.

While the introduction of external perforation means into the capsule add more complexity and can cause problems (scale, contamination of the external perforation members of the beverage-production machine by the ingredients contained in the capsule etc.), the technology as proposed in WO 2005/066040 having a weakened area of the capsule exposed to the injected pressure does not constitute a reliable opening mode. Furthermore, this solution cannot inject water in the proper direction in the capsule to wet, extract and/or dissolve the entire mass of ingredient.

WO 2004/078009 shows a technique for fluidizing a liquid dispersible ingredient in a pod. A fluid distribution member directs water directly into the ingredient chamber and in a direction which not normal to the top face of the pod. This technique is more directed to poorly soluble products such as creamers for which fluidizing provides an improved, quicker dispersion in the liquid.

EP1344722 shows a beverage-ingredient containing capsule having rigid internal filter plates, which filter plates are provided with corrugations which serve to define, together with the adjacent face of the capsule wall, open channels defined by embossings for distributing and collecting liquid at the water inlet side and the water outlet side, respectively, of the capsule. In order to guarantee this distribution and collection effect, the filter plates defining the open channels have to extend over the total surface of the ingredient volume and the embossings have to interact with the adjacent face of the capsule for a correct distribution effect.

However, with capsule containing compacted ingredients, such as compacted cakes of ground coffee, another problem is to ensure a complete wetting of the ingredients. Wetting of the ingredient determines the degree of extraction of the ingredients (i.e. the amount of total solids extracted by the liquid). If areas of solids are not properly wetted, less solids are found in the final extracted liquid. Therefore, it has been preferred, until now, to provide many piercing sites for injection of water through the capsule to ensure a proper water distribution through the ingredients.

For example, EP0604615 or EP0870457 describe systems for extracting flexible sachets with multiple piercing needles. However, having many injections sites cause more complexity to the system and requires also higher closing forces for piercing the capsule due to the compactness of the capsule. On the other hand, the problem of having only a centralized injection point is that water distribution must be assured correctly through the ingredients.

Therefore, there is no existing solution for both removing complexity in the machine and problems related to water injection while properly carrying out the injection of water in the capsule.

It is therefore the object of the present invention to provide for a technology that meets these needs.

Generally it is an idea to incorporate water-jet diverting means into the capsule itself such that these water-jet diverting means are only used once in connection with the associated capsule. According to one general idea of the invention the water-jet diverting means can be internal mechanical members of the capsule which assist in
- producing an opening for the water jet, and/or
- once it has passed the opening of the capsule, redirecting (diverting) the direction of the water jet through elements with contours which are closed towards the neighboring capsule wall(holes, enclosed channels, slots).

The object is preferably achieved by means of the features of the independent claims. The dependent claims develop further the central idea of the present invention.

The capsule can be provided with at least one inner jet direction-diverting member being arranged adjacent to the inner surface of a face of the capsule. The inner jet direction-diverting member can be designed to divert the direction of at least a portion of a water jet injected trough the face of the capsule. The jet direction is properly achieved by guiding the injected water through at least one element with contours, which are closed towards the neighboring capsule wall, such as e.g. channels, openings or slots, wherein this element has a orientation (when seen from the center of the water injection) having a radial component. After being radially distributed, the water preferably is redirected to traverse the ingredient bed in an essentially axial direction. In particular, the water is preferably redirected to flow through the ingredients in axial direction by a filter that is placed adjacent the face of the capsule.

The jet direction-diverting member can be designed to divert the water jet coming from the injection member into one or several, preferably radial jets.

The jet direction-diverting member can comprise an essentially cup-like main body.

The jet direction-diverting member can comprise radial openings, slots or channels in a wall of the cup-like main body and/or the.rim of the cup-like main body.

The capsule can be provided with at least two jet direction-diverting members, which are arranged symmetrically in the capsule and respectively close to the inner surface of one face of the capsule. This arrangement has the advantage that the capsule can be placed for preparation in two possible positions since the design of the inlet and outlet sides are symmetrical. Therefore the two opposing faces of the capsule can be used indifferently as the inlet side or the outlet side.

At least one direction-diverting member can be provided with an inner perforation member designed to assist in producing an opening in the face of the capsule.

At least one direction-diverting member can occupy a smaller surface than the entire inner surface of the associated face. The surface occupied should be as small as possible to minimize the resulting forces on the capsule holder but large enough to enable the deformations of the capsule surface for opening (e.g., puncturing). For example, the at least one direction-diverting member can occupy less than 1/16 of the inner surface of the face. For example, the direction-diverting member can have a larger width (e.g., a diameter) of less than about 2 cm, even less than 1.5 cm.

A filter can be placed close to the inner surface of the face of the capsule, preferably in the region of the face which is not covered by the direction-diverting member. In case such filters membrane is present, the direction-diverting member does not have to assume a filtering function such that the openings in the direction-diverting member can be made larger than the average grain size of particulate ingredients contained in the capsule. The direction-diverting member will radially direct the injected water in a space confined by the filter membrane and the adjacent capsule wall before entering the ingredient space through (vertically oriented) openings in the filter membrane, which filter membrane openings will preferably have a size smaller than the average grain size of particulate ingredients contained in the capsule. After having been radially distributed, the water traverses the filter membrane and then the ingredient bed in any axial direction or an inward direction which is essentially normal to the external face of the capsule.

The direction-diverting member can be inserted between the filter and the surface of the wall in the region occupied by the direction-diverting member.

A compacted (and thus form-stable) ingredient such as a coffee cake or other suitable means can maintain at least one direction-diverting member in a defined position adjacent to the inner surface of the associated face of the capsule.

The present invention relates to a system according to claim 1.

The profiling means are preferably oriented in a radial manner.

When the enclosing member engages the beverage capsule, the profiling means preferably is so configured that they run from the vicinity of the direction-diverting member towards the periphery of the beverage capsule.

The enclosing member can comprise water injection means which are configured to deliver water in the capsule through the inner jet direction-diverting member.

The water injection means can be free of perforation means for opening the wall of the capsule.

The beverage production device can comprise a capsule holder for supporting the capsule, wherein the capsule holder can be designed to selectively cooperate with an enclosing member such that a supported capsule is tightly enclosed.

The capsule holder can comprise at least one protruding element adapted to tear or pierce a face of the capsule for releasing a produced beverage. The protruding element can be placed in a laterally offset position relative to the position of the inner jet direction-diverting member when the capsule is placed in tight engagement between the enclosing member and the capsule holder.

The capsule holder can comprise a plurality of relief elements placed around the direction-diverting member.

A still further aspect of the present invention relates to a method for producing beverage from an ingredient-containing capsule according to claim 10.

Further advantages, objects and features will now become evident by means of the detailed description of a preferred embodiment of the present invention when taking in conjunction with the figures of the enclosed drawings.
- Fig. 1: shows an overview of a capsule inserted in tight engagement between a capsule holder and an enclosing member of a beverage-producing machine,
- Fig. 2: shows an enclosing injection member which can be used in connection with the present invention,
- Fig. 3: shows different views of a capsule according to the present invention,
- Fig. 4: shows a detail of the present invention, which is the jet-direction diverting member,
- Fig.5: shows a cross-sectional view of another embodiment of a capsule without internal piercing member,
- Fig. 6: shows an exploded view of the embodiment of Fig. 5,
- Fig. 7: shows the jet-diverting member of the embodiment of Fig. 5,
- Fig. 8: shows the capsule according to the embodiment of Fig. 5 when placed in a beverage production machine, and
- Fig. 9: shows the upper face of a capsule According to the present invention in a state after being used in the machine of Fig. 8, such that channels have been dynamically profiled in the upper face of the capsule.

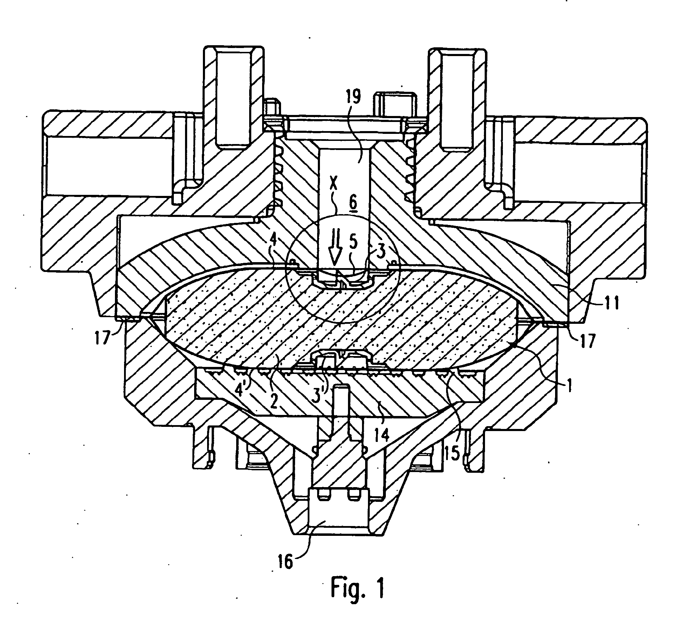

Fig. 1 shows a capsule 1 which is inserted and tightly enclosed by a capsule holder 14 and an upper enclosing member 11 of a beverage producing machine.

The capsule 1, which is usually still sealed when inserted into the beverage production device, contains an ingredient 2 for producing a beverage or another liquid comestible. The capsule 1 will not be opened by the fingers of a user, but by dedicated elements of the beverage production device.

The upper side of the capsule 1 in figure 1 represents the liquid-inlet side. Once an opening is produced in the upper side of the capsule 1, e.g. water injection means 19 can inject water or other nutritional liquids into the capsule. In the capsule 1 the injected liquid will interact with the ingredient in order to produce a beverage or a liquid comestible.

Once at the outlet side, which is the lower side of the capsule 1 in the example of figure 1, one or more openings have been produced, the produced beverage can be drained through a beverage outlet 16 of the beverage producing device.

In the context of the present specification, the beverage-ingredient 2 in the capsule 1 can be a coffee ingredient such as for example compacted ground roasted coffee powder. The coffee powder can be compacted to form a relatively solid and essentially form-stable cake. In this case preferably hot water under pressure is injected by the injection means 19.

Note that a wide variety of ingredients can be used, which can differ chemically and physically (e.g. liquids, solid, powders, viscous paste etc.) and which can also be mixed in the capsule 1.

As will be explained later on in great detail, in the interior of the capsule 1 in a position close to one of the faces 4, 4', an inner jet direction-diverting member 3, 3' is placed.

Generally, the jet direction-diverting member 3,3' is arranged such that the direction of the injected water jet takes place before the water jet interacts with the beverage ingredients.

The inner jet direction-diverting member 3, 3' can be held in position (close to the associated face of the capsule) by being sandwiched between compacted ingredients and the face 4, 4', by being mechanically connected to the face or by being an integral piece of the face.

Preferably the inner jet direction-diverting members 3, 3' are made from essentially rigid plastics materials, e.g. formed by injection-moulding.

Preferred materials for the faces 4, 4' of the capsule 1 are plastics and/or metal (e.g. aluminum) foils.

Note that preferably there is no difference between the upper face 4 and the lower face 4' of the capsule, such that the outer shape of capsule 1 is symmetrical. The terms "upper face" and "lower face" thus serve for illustrative purposes only and has to be seen in context with the position and orientation of the capsule 1 as shown in figure 1, which is only an example.

Due to the symmetrical shape of the capsule 1, both faces 4, 4' can serve as an inlet side and outlet side, respectively. This is especially advantageous when the capsule is delivered in an automated fashion to the position as shown in Figure 1, i.e. the beverage-production position.

In the following it shall be described as how the capsules 1 as shown in figure 1 can be used in context with the beverage-production device according to the present invention.

During manufacturing the sealed capsule 1 is produced having in its interior the preferably compacted ingredient 2 and one or more jet direction-diverting members 3, 3' respectively associated with one face 4, 4' of the capsule.

The user will then insert the sealed capsule into the beverage production machine by placing it on a capsule holder (capsule support) 14.

In the next step, once the capsule is placed on or close to the capsule holder 14, a relative movement between the capsule holder 14 and a enclassing member 11 will lead to a tight enclosure of the capsule 1 between the enclosing member 11 and the capsule holder 14. This tight engagement (enclosing) can be assisted by dedicated sealing means 17 provided at the contact surface between the enclosing member 11 and the capsule holder 14.

Preferably the capsule 1 is still sealed (i.e. no perforation is produced in the walls defining the capsule) when producing the tight enclosing of the capsule 1.

In a next step, the water injection means 19 of the beverage production device will apply a water pressure on the outer side of the face 4 of the capsule 1, which outer water pressure will cause the area of the face 4 occupied by the water injection means 19 to be deflected towards the interior of the capsule 1.

According to this embodiment, the coffee machine itself does not have mechanical perforation means at the inlet side of the capsule.

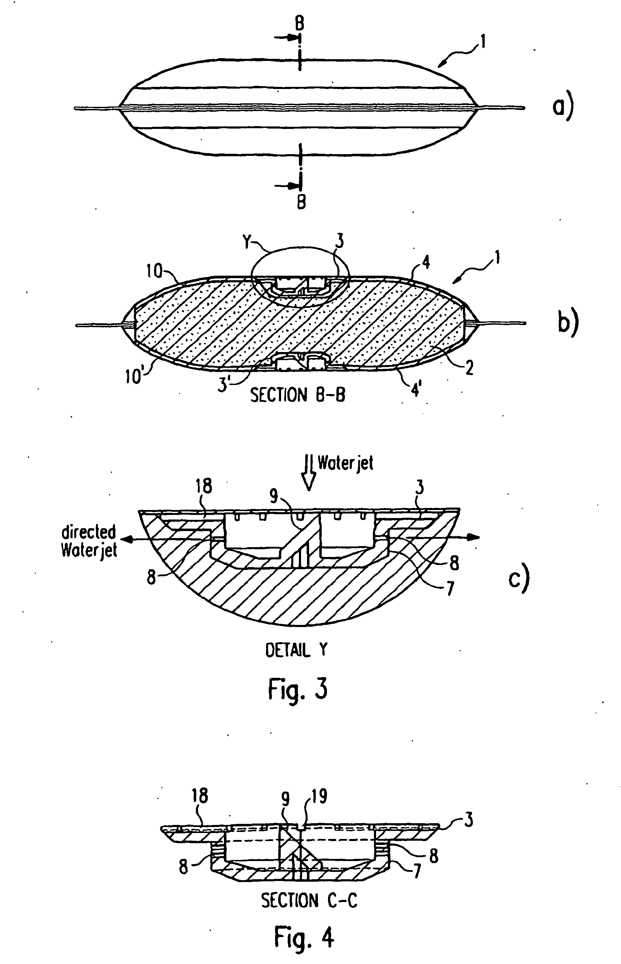

Preferably the capsule 1 is provided with optional rigid inner perforation members 9 (which will be explained later on in context with figure 3), wherein these inner perforation members 9 can e.g. be integrated into the jet-diverting member 3, 3'. Of course, more than one member can be provided in each jet-diverting member to be able to produce more than one opening.

In any case, applying the external water pressure will, preferably assisted by said optional inner perforation means 9, produce an opening at the inlet side 4 of the capsule 1.

A water jet will then be injected into the interior of the capsule 1 through the thus produced opening.

The water injection means 19 will define a main direction for the injected water jet. The water jet diverting member 3, 3' now serve to modify the orientation of the injected water jet and/or split the injected water jet in several sub-jets.

In most of the cases the water injection means 19 will inject the water in a direction perpendicular to the contour of the face 4, 4' of the capsule 1. The jet diverting members 3, 3' now serve to divert this direction (which would otherwise lead straight to the centre of the capsule) in a direction which is no longer perpendicular to the contour of the associated face 4 of the capsule 1. Preferably the jet diverting member 3, 3' are designed to redirect the injected water by an angle of up to approximately 90 degrees such that the water jet will continue its path into the interior of the capsule 1 with a substantial radial component.

Preferably the water jet is not only redirected, but also split in several sub-jets.

Details of the mechanical designs able to achieve the redirection of the water injection will be explained later on with reference to figures 3 and 4.

In any case, when the water is injected into the interior of the capsule 1, the pressure inside of the capsule will increase. Preferably according to the invention this pressure increase in the interior of the capsule 1 is used to also produce openings at the outlet side 4' of the capsule 1. Preferably this opening of the outlet side 4' of the capsule 1 is produced with some delay (corresponding to an increase of the pressure) with reference to the opening of the inlet side 4 of the capsule 1 and the start of the water injection process

Preferably the increase of the pressure inside the capsule 1 causes the lower face 4' of the capsule 1 to be thrust against perforation means 15 of the beverage-production device. Preferably these perforation means 15 are integral part of the capsule holder 14. The lower face 4' will thus be thrust against the perforation means 15 until the lower face 4' ruptures, breaks or is otherwise open.

As can be seen from this explanation, preferably although a second jet-diverting member 3' is provided at the outlet side 4' of the capsule 1 (in order to have a symmetrical capsule 1), the jet-diverting member 3' (having optionally also an integrated inner perforation member) has no function with regard to the opening of the lower face 4' of the capsule 1 and the draining of a beverage produced from the beverage ingredients 2 contained in the capsule 1.

In any case, once the lower face 4' of the capsule 1 is opened, the beverage can be drained e.g. through channels in the capsule holder 14 to a beverage outlet 16 and then be recovered e.g. in a cup.

Actually there are no separate internal water-distributing means, but optionally water-distributing means in the face of the capsule itself as will be explained now. The water-distributing means in the face of the capsule can already be present in the face before inserting it in the machine, or can be produced dynamically "in situ", i.e. after the capsule is inserted into the beverage-production machine.

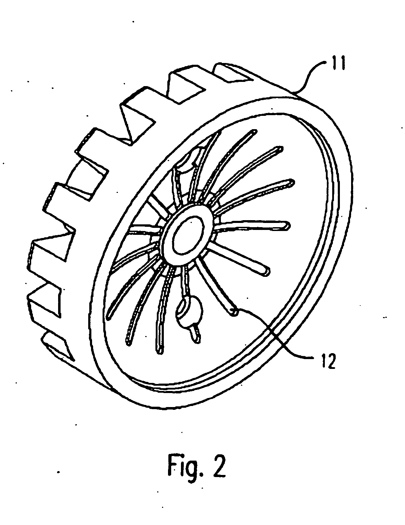

With reference to figure 2 a preferred embodiment for an enclosing member 11 to be used in connection with the present invention will be explained, wherein the enclosing member according to this embodiment assists in the dynamic profiling of inner water-distribution channels produced in the face of the capsule.

As already stated above, inside the capsule and before use of the capsule there are no separate water jet distribution means. In order to assist a proper distribution of the diverted water jet throughout the entire volume of the capsule 1, the wall of the enclosing member 11 which is directed to the capsule 1 is provided with profiling means 12. These profiling means 12 can e.g. be protruding or recessed portions of the inner contour of the enclosing member 11. The profiling means 12 are preferably arranged radially via-a-vis the centre of the enclosing member 11, which is at the same time in a position of the water injection means 19.

The function of the profiling means 12 of the enclosing member 11 is the following:
As already explained above, the water injection into the capsule 1 will cause the (water) pressure inside the capsule 1 to increase. It has already been explained that the lower face 4' will be thrust against the perforation members 15 of the capsule holder 14. At the same time also the upper surface 4 of the capsule 1, which is the face of the capsule 1 being in contact with the inner contour of the enclosing member 11, will be thrust against the contour of the enclosing member 11.

The faces 4, 4' of the capsule 1 are usually made of a relatively flexible material such as for example a foil made of plastics or metal (for example aluminum). When the thin foil of the upper face 4 of the capsule 1 will be thrust against the profiling means provided in the inner contour of the enclosing members 11, the face 4 will finally match the contour of the enclosing member 11, which means that the face 4 (which has been flat before) will be dynamically (i.e. along with the water, pressure increase) profiled thus producing water distribution channels in the face 4 of a capsule 1. As already explained above, these water distribution channels which are dynamically produced in the upper face 4 of the capsule 1 will preferably be oriented in a radial manner starting essentially from the outer rim of the jet diverting member 3, 3' and leading towards the portion of the capsule 1 which is the most remote to the center. Water injected through the opening of the inlet side 4 of the capsule 1 thus is redirected by the jet diverting member 3, 3' and can then follow the dynamically produced water distribution channels in the upper face 4 of the capsule 1 which guarantees that the injected water will be more or less evenly distributed over the entire surface of the capsule before interacting with the ingredient 2 contained in the capsule 1.

Alternatively the water distribution channels in the upper face 4 of the capsule 1 are at least partially already produced when manufacturing the capsule 1. The water distribution channels can be preformed in one or both faces 4, 4' of the capsule 1.

The width of the channels are preferably narrow to prevent ground particle, i.e., coffee particles, to fill and block the channels. The width of the channels can be chosen to be smaller than the average particle size. For instance, The channels may be smaller than or equal to 0.3 mm.

A filter 10 helps to prevent ground particles from entering the channels and it allows to increase the width of the channels with less risk that the channels get blocked by ground particles.

With reference to figure 3 now details of the interior of the capsule 1 will be explained.

As is shown in figure 3b, 3c, the filter 10 can be placed between the preferably compacted beverage ingredient 2 in the capsule and the water jet diverting member 3, 3'.

In the region of the water jet diverting member 3, 3' the filter 10 will be sandwiched between the ingredient 2 and the water jet diverting member 3, 3'. In the region of the faces. 4, 4' of the capsule 1 outside the water jet diverting members 3, 3' the filter 10 will be sandwiched between the ingredient 2 and the face 4, 4' of the capsule 1. The filter 10 can e.g. be a foil or sheet of porous material such as e.g. filter paper or a perforated plastic film. It can be noted that the filter optionally can be attached to the insert by any suitable connection means such as gluing or welding. In another possible mode, the insert and filter are made in one piece.

The insert can also be accommodated in a central opening of the filter such that the filter is arranged surrounding the insert.

With reference to figure 3c now a preferred design for the water jet-diverting member 3, 3' will be explained.

The water jet-diverting member 3 has a cup-shaped main body 7.

Optionally inside the cup-shaped main body 7 an inner perforation member 9 e.g. having the shape of a blade, a needle etc. can be provided.

Water injected in the capsule will thus arrive perpendicularly inside the cup-shaped main body 7 of the jet diverting member 3.

Now, radial opening means 8, 18 are provided which will make the water jet leave the cup-shaped main body 7 of the jet diverting member 3 (preferably radially outwards). These means can e.g. be openings or slots 8 in the wall of a cup-shaped main body of the jet diverting member 3 and/or (open) channels 18 provided in the upper flange-like rim of the cup shaped main body 7 of the jet diverting member 3. Note that additionally or alternatively also inclined openings, slots or channels in the bottom of the cup-like main body 7 of the jet diverting member 3 can be provided.

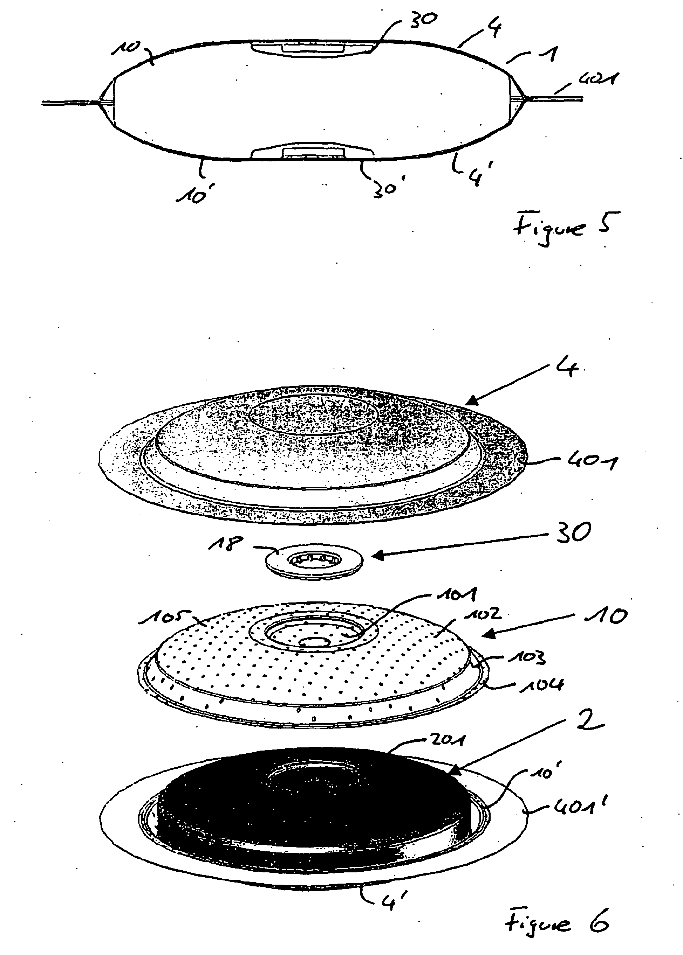

With reference to figures 5 to 9 now another embodiment of the present invention will be explained, which embodiment relies on an insert 30 (in Fig. 6) which has no protruding (sharp) piercing member.

Fig. 5 shows a symmetric capsule 1 with its upper face 4 and its lower face 4', which are symmetrically sealed to each other at the flange portion 401.

Both below the top face.4 and above the bottom face 4' respectively an insert 30, 30' can be placed, although that it is sufficient to provide only one insert 30 next to the face 4 to be opened and which is made to serve as the water inlet side of the capsule 1.

This insert 30 is placed between the top wall 4 and a first filter membrane 10, while the optional second insert 30' is placed between a second filter membrane 10' and the bottom face 4'.

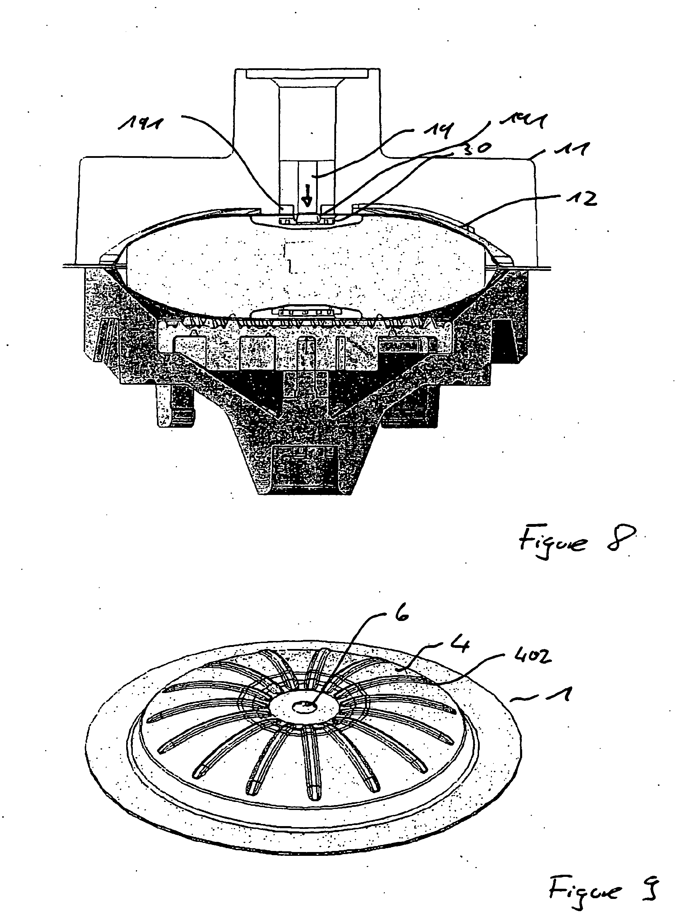

As will be explained with reference to the figures, this insert 30 does not have sharp protruding piercing elements. Preferably such rigid insert 30, made e.g. from injection molded plastics, only passively assists in the opening of the top face 4 of the capsule 1 when a rigid tubular member (s. Fig. 8) is thrust against the capsule 1 such that the top face 4 will be opened by a shearing effect between the rigid insert 30 and the edge of the rigid tubular member.

Fig. 6 shows an exploded view of the embodiment according to Fig. 5.

The outer, preferably air-tight wall of the capsule 1 is made by welding together preferably identical symmetrically arranged wall members 444, 44'4' at respective flanges 401, 401'.

As is illustrated in Fig. 6, the ingredients 2 are preferably present as a compact form-stable bed of ingredients which can be formed in a shape as shown e.g. in Fig. 6.

As shown in Fig. 6, the ingredient cake 2 can be compacted with a central depression 201 which is arranged for accommodating a central depression 101 of the filter membrane 10.

The filter membrane 10 is provided with a plurality of holes 105 which are essentially directed in an axial (vertical) direction for guiding water in the axial (vertical in the figure) direction.

The average size of these filter membrane holes 105 is preferably smaller than the average grain size of the particulate substance which is pressed together to the compacted ingredient bed 2.

The filter membrane 10 preferably has a slightly convex portion 102 surrounding the central depression 101. A portion 103 with a more vertical angle than the portion 102 is provided surrounding the portion 102. Preferably the outer edge of the filter membrane 10 is formed as a small flange rim 104 at which two symmetrically arranged filter membranes 10, 10' join each other and can even bye sealed tightly together in order to tightly surround the ingredients 2.

In any case it is to be noted that the compacted bed 2 of ingredients has a self-stable shape matching the contours of the filter membrane 10.

The rigid insert 30 is preferably inserted into the central depression 101 of the filter membrane 10. Preferably the central depression 101 of the filter membrane 10 accommodates the rigid insert 30 such that an upper plane flange area 18 of the insert 30 flushes with the contour of the filter membrane 10. In other words, the contours of the insert 30 match the contour of the central depression 101 of the filter membrane 10 such that preferably the upper contour of the insert 30 does not protrude from the surrounding area of the filter membrane 10.

In any case, from the exploded view in Fig. 6 it is evident that the insert 30 is preferably arranged between the filter 10 and face 4.

Note that the area of the filter membrane 10 covered by the insert 30 does not necessarily have to be provided with filter holes 105.

The rigid insert 30 will direct water injected through the face 4, preferably into a small space confined by the concave section 102 of the filter membrane 10 and the neighboring wall 4. The water will then simply follow the concave shape 102, 103 of the filter membrane 10 and will thus be spread over the entire surface of the ingredient bed 2. After this distribution of the injected water by means of the filter membrane 10, the water will pass through the filter openings 105 and will then interact with the ingredients 2 while traversing axially (vertically in Fig. 6) the ingredients 2.

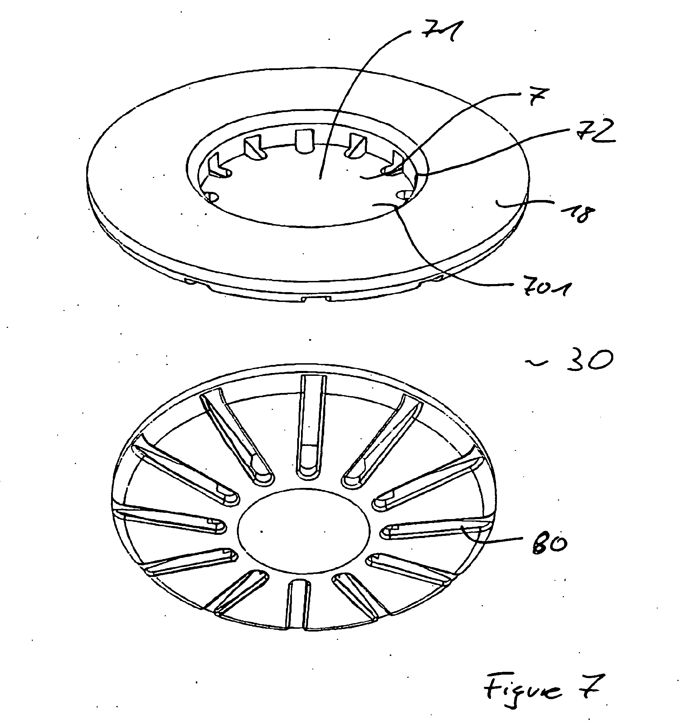

Fig. 7 shows a preferred implementation of the insert 30 which will be used in the embodiment of figures 5 to 9.

The insert 30 has a cup-like main body 7 with a recessed bottom 71 which is essentially flat.

In a ray-like radial arrangement slot channels 80 provide for a fluid communication between the interior of the cup-like main body 7 of the insert 30 and the space between the filter membrane 10 and the neighboring wall 4 of the capsule (s. Fig. 6).

The cross-section of the slot channels 80 is preferably made larger than the average grain size of the particulate ingredients. Thus the channels do not represent a flow resistance for the injected water. The flow resistance is actually mainly determined by the filter membrane(s) and especially by the ingredient bed or cake 2.

The slotted channels 80 can have a completely closed cross-sectional contour or, as shown in Fig. 7, are at least closed towards the neighboring wall 4 of the capsule 1.

As can be seen from the upper illustration of Fig. 7, no slotted channels 80 are visible in a top view of the insert 30 manifesting that the flange area 18 of the insert 30 entirely closes the slotted channels 80 towards the neighboring wall 4 of the capsule 1. Thus, the jet diverting effect of the slotted channels 80 does not rely on a cooperation between the rigid insert 30 and the capsule wall 4.

The capsule wall 4 will rest entirely supported and flat on a flange area 18 of the rigid insert 30 and thanks to the solid flange area 18 there is no risk to collapse the slotted channels 80 when soliciting the face 4 of the capsule 1. Thus no channels can be formed between the insert 30 and the capsule wall.

As can be seen in Fig. 8, such a capsule as illustrated with reference to figures 5 to 7 can be placed in a beverage production machine. The beverage production machine has a water injection member 19 which essentially is a rigid tubular member. This rigid tubular member 19 will be mechanically engaged against the face 4 of the capsule such that the face 4 of the capsule will be opened by a shearing effect between the outer edge 191 of the rigid tubular member and the inner edge 72 (see Fig. 8) of the rigid insert 30. To this regard, the outer circumference of the rigid tubular members 19 is preferably made to tightly fit into the inner circumference of the central depression 71 of the rigid insert 30. insert 30.

An advantage of the invention is also that there is no significant effort to be produced by the water injection member 19 for opening the face 4. The face 4 can be a flexible foil made of plastic and or metal. Furthermore, the compacted coffee powder is kept distant from the opening site because of the presence of the rigid insert 30. Therefore, the machine can be greatly simplified with an enclosing member 11 which can be closed with a lower effort compared to the existing machines with enclosing members provided with multiples piercing elements. At the same time, the compacted coffee cake can be properly wetted and traversed all across the capsule section therefore ensuring a higher extraction level for an equal coffee amount in the capsule.

The rigid tubular member 19 will then inject water into the area of the central depression 71 of the insert, wherein this injection can be made radially and/or axially (vertically in Fig. 8). In any case, the rigid insert 30 will redirect any infected water from the rigid tubular member 19 such that the injected water will reach the area between the filter membrane 10 and the upper face 4 of the capsule 1.

Advantageously, the present invention also proposes, in a preferred embodiment, a mechanism for avoiding leaking of water from the tubular rigid member 19 to the outside of the capsule 1.

As can be seen in Fig. 8, the enclosing member 11 of the beverage production machine is provided with a sealing portion 191 which has essentially a matching shape to the flange area 18 of the rigid insert 30. when closing the enclosing member 11, the sealing portion 191 will be thrust against the flange area 18 of the rigid insert 30, the face 4 of the capsule 1 to be opened being sandwiched in between. The cooperation of the sealing portion 191 of the enclosing member 11, the face 4 of the capsule 1 and the flange area 18 of the rigid insert 30 provide for a sealing effect such that water injected into the depression 71 of the insert 30 can only escape through the slotted channels 80, but can not leak to the outside of the capsule 1. Therefore, this sealing arrangement ensures, essentially by effect of the inside pressure, the forming of channels 80 in the face 4 of the capsule against the inner surface of the enclosing member. Another advantage is that there is no longer a need to control a watertight sealing by the pinching of the welded flanges 401, 401' of the capsule. The system is therefore simplified compared to the system described in EP0870457.

This sealing effect can be improved by the fact that preferably the rigid insert 30 is well supported by the solid compacted bed of particular ingredients 2 such that the insert 30 can procure a counterforce against the thrusting effect of the enclosing member 11.

It has already been explained that the inner dome of the enclosing member 11 is provided with profiling means as shown in detail in Fig. 2.

As can be seen in Fig. 9, the pressurizing of the interior of the capsule 1 will lead to the face 4 of the capsule 1 dynamically adapting the contours of the profiling means in the dome of the enclosing member 11. Therefore, during the water injection process, water distribution channels 402 will be formed dynamically in the upper face 4 of the capsule 1, while channels 402 are preferably channels protruding to the outside of the upper faces 4. It is obvious that the dome of the enclosing member 11 can also be provided with protruding profiling means in which case the upper side 4 of the capsule 1 will be provided with recessed groves instead of the protruding channels as shown in Fig. 9.

## Claims

1. A. capsule system comprising an ingredient-containing capsule and a beverage production device designed for producing a beverage or liquid comestible by injecting a liquid into the ingredient-containing capsule (1), the capsule comprising at least one rigid insert comprising a flange area (18);
the device being provided with an enclosing member (11) for at least partially enclosing the capsule (1),
the enclosing member (11) comprising a water injection member (19) having a sealing portion (191) and recessed and/or protruding profiling means (12); wherein said sealing portion (191) thrusts against the flange area (18) of the insert (30) to provide a sealing effect enabling the interior of the capsule to be pressurised by the injected water and for creating inner flow channels in at least one face (4) of the capsule (1) by pressing the face (4) against the profiling means (12), thereby deforming the face (4) of the capsule (1) when the interior of the capsule (1) is pressurized by injecting water.

2. The beverage capsule system according to claim 1, wherein the profiling means (12) are radially oriented.

3. The beverage capsule (1) system of claims 1 or 2. wherein the rigid insert forms an inner jet direction-diverting member (3, 3').

4. The beverage capsule (1) system of claim 3, wherein the water injection means (19 are configured to deliver water in the capsule (1) through the inner jet direction-diverting member (3, 3').

5. The beverage capsule (1) system of claim 4, wherein the water injection means (19) is void of perforation means: for opening the wall (4) or the capsule.

6. The beverage capsule (1) system of claim 3, wherein the beverage production device comprises a capsule, holder (14) for supporting the capsule (1), wherein the capsule holder (14) is designed to selectively cooperate with the enclosing members (3, 3') such that a: supported capsule (1) is tightly enclosed.

7. The beverage capsule (1) system of claim 6, wherein the capsule holder (14) comprises at least one protruding element (15) adapted to tear or pierce a face (4') of the capsule (1) for release of the beverage; ;
said: protruding element: (15) being placed in a laterally offset position relative to the position of the inner jet direction-diverting member (3, 3') when the capsule (1) is placed in tight engagement between the enclosing members (3, 3') and the capsule holder (14).

8. The beverage capsule (1) system of claim 7, therein the capsule (1) holder comprises a plurality of relief elements (155) placed around the direction-diverting member (3, 3').

9. The beverage capsules (1) system of claim 1, wherein the rigid insert is supported by a solid compacted bed of particular ingredient such that the insert (30) can procure a counterforce against the thrusting effect of the enclosing member.

10. A method for producing a beverage from an ingredient-containing capsule (1) in a beverage capsule system according to any of the receding claims,
the method comprising the following steps:
- inserting the capsule (1) in the enclosing member (11),
- injecting a liquid under pressure into the capsule (1) and creating inner flow channels in a first face (4) of the capsule (1) by deforming the face (4) of the capsule (1) when the interior of the capsule (1) is pressurized by injecting water and,
- distributing the injected water assisted by the flow channels defined by the deformed profile of the face (4) of the capsule.

11. The method according to claim 10, wherein the inner channels are profiled dynamically in at least one face (4) of the capsule (1) buy pressing the face (4) of the capsule (1) against profiling means (12) of an enclosing member (11) of a beverage-production device.

12. The method according to claim 11, wherein the inner channels are produced by the effect of the internal pressure in the capsule during injection

13. The method according to any of claims 10 or 12, wherein the inner channels in a face of the capsule are at least partially generated when manufacturing the capsule and before inserting it in a beverage-production device.

## Patentansprüche

1. Kapselsystem mit einer Inhaltsstoff enthaltenden Kapsel und einer zur Herstellung eines Getränks oder Flüssignahrungsmittels durch Einspritzen einer Flüssigkeit in die Inhaltsstoff enthaltende Kapsel (1) ausgelegten Getränkeherstellungsvorrichtung, wobei die Kapsel zumindest einen starren Einsatz mit einem Flanschbereich (18) umfasst;
wobei die Vorrichtung mit einem Einschließteil (11) versehen ist, um die Kapsel (1) zumindest teilweise einzuschließen,
wobei das Einschließteil (11) ein Wassereinspritzteil (19) mit einem Dichtabschnitt (191) sowie vertieften und/oder hervorstehenden Profileinrichtungen (12) umfasst;
wobei der Dichtabschnitt (191) gegen den Flanschbereich (18) des Einsatzes (30) drückt, um eine Dichtwirkung herzustellen, die es ermöglicht, dass das Innere der Kapsel durch das eingespritzte Wasser unter Druck gesetzt wird, und zur Bildung von inneren Durchflusskanälen in mindestens einer Fläche (4) der Kapsel (1), indem die Fläche (4) gegen die Profileinrichtungen (12) gedrückt wird und **dadurch** die Fläche (4) der Kapsel (1) verformt wird, wenn das Innere der Kapsel (1) durch das Einspritzen von Wasser unter Druck gesetzt wird.

2. Getränkekapselsystem gemäß Anspruch 1, wobei die Profileinrichtungen (12) radial ausgerichtet sind.

3. Getränkekapsel (1) -System gemäß Anspruch 1 oder 2, wobei der starre Einsatz ein inneres Strahlablenkungsteil (3, 3') bildet.

4. Getränkekapsel (1)-System gemäß Anspruch 3, wobei die Wassereinspritzeinrichtungen (19) so ausgestaltet sind, dass sie durch das innere Strahlumlenkteil (3, 3') Wasser in die Kapsel (1) abgeben.

5. Getränkekapsel (1)-Anordnung gemäß Anspruch 4, wobei die Wassereinspritzeinrichtung (19) keine Perforiereinrichtungen zum Öffnen der Wand (4) der Kapsel aufweist.

6. Getränkekapsel (1)-Anordnung gemäß Anspruch 3, wobei die Getränkeherstellungsvorrichtung einen Kapselhalter (14) zum Abstützen der Kapsel (1) umfasst, wobei der Kapselhalter (14) derart ausgeführt ist, dass er wahlweise mit dem Einschließteil (3, 3') zusammenwirkt, so dass eine abgestützte Kapsel (1) fest umschlossen ist.

7. Getränkekapsel (1)-Anordnung gemäß Anspruch 6, wobei der Kapselhalter (14) mindestens ein hervorstehendes Element (15) umfasst, das zum Aufreißen oder Durchstoßen einer Fläche (4') der Kapsel (1) zur Abgabe des Getränks geeignet ist;
wobei das hervorstehende Element (15) in eine seitlich versetzte Stellung relativ zur Stellung des inneren Strahlumlenkteil (3, 3') gebracht wird, wenn die Kapsel (1) in festem Eingriff zwischen dem Einschließteil (3, 3') und dem Kapselhalter (14) steht.

8. Getränkekapsel (1)-Anordnung gemäß Anspruch 7, wobei der Halter der Kapsel (1) mehrere Reliefteile (15) umfasst, welche um das Umlenkteil (3, 3') herum angeordnet sind.

9. Getränkekapsel (1)-Anordnung gemäß Anspruch 1, wobei der starre Einsatz von einer festen, verdichteten Schicht aus bestimmten Inhaltsstoffen gehalten wird, so dass der Einsatz (30) eine Gegenkraft zu der Druckwirkung des Einschließteils bereitstellen kann.

10. Verfahren zur Herstellung eines Getränks aus einer Inhaltsstoff enthaltenden Kapsel (1) in einem Getränkekapselsystem gemäß einem der vorhergehenden Ansprüche,
wobei das Verfahren folgende Schritte umfasst:
- Einsetzen der Kapsel (1) in das Einschließteil (11),
- Einspritzen einer Flüssigkeit unter Druck in die Kapsel (1) und Bilden von inneren Durchflusskanälen in einer ersten Fläche (4) der Kapsel (1) durch Verformen der Fläche (4) der Kapsel (1), wenn das Innere der Kapsel (1) durch Einspritzen von Wasser unter Druck gesetzt wird, und
- Verteilen des eingespritzten Wassers mit Hilfe der durch das verformte Profil der Fläche (4) der Kapsel festgelegten Durchflusskanäle.

11. Verfahren gemäß Anspruch 10,
wobei die inneren Kanäle dynamisch in mindestens einer Fläche (4) der Kapsel (1) profiliert werden, indem die Fläche (4) der Kapsel (1) gegen Profileinrichtungen (12) eines Einschließteils (11) einer Getränkeherstellungsvorrichtung gedrückt wird.

12. Verfahren gemäß Anspruch 11, wobei die inneren Kanäle durch die Wirkung des Innendrucks in der Kapsel während der Einspritzung hergestellt werden.

13. Verfahren gemäß einem der Ansprüche 10 bis 12, wobei die inneren Kanäle in einer Fläche der Kapsel zumindest teilweise bei der Herstellung der Kapsel und vor deren Einsetzen in eine Getränkeherstellungsvorrichtung gebildet werden.

## Revendications

1. Un système de capsule comprenant une capsule contenant des ingrédients, et un dispositif de production de boisson conçu pour produire une boisson ou un liquide comestible en injectant un liquide dans la capsule (1) contenant des ingrédients, la capsule comprenant au moins un insert rigide comprenant une zone de collet (18);
le dispositif disposant d'un organe enveloppant ou entourant (11) pour envelopper ou entourer au moins partiellement la capsule (1),
l'organe enveloppant (11) comprenant un organe d'injection d'eau (19) ayant une partie étanchéifiante (191) et des moyens de profilage (12) encastrés et/ou faisant saillie; ladite partie étanchéifiante (191) poussant contre la zone de collet (18) de l'insert (30) pour fournir un effet d'étanchéité permettant à l'intérieur de la capsule d'être mis sous pression par l'eau injectée et pour créer des canaux intérieurs d'écoulement dans au moins une face (4) de la capsule (1) en pressant la face (4) contre les moyens de profilage (12), déformant ainsi la face (4) de la capsule (1) lorsque l'intérieur de la capsule (1) est mis sous pression en injectant de l'eau.

2. Le système de capsule de boisson selon la revendication 1,
dans lequel les moyens de profilage (12) sont orientés radialement.

3. Le système de capsule (1) de boisson selon les revendications 1 ou 2,
dans lequel l'insert rigide forme un organe (3, 3') de déviation de direction de jet interieur.

4. Le système de capsule (1) de boisson selon la revendication 3,
dans lequel les moyens d'injection d'eau (19) sont configurés pour distribuer de l'eau dans la capsule (1) à travers l'organe (3, 3') de déviation de direction de jet interieur.

5. Le système de capsule (1) de boisson selon la revendication 4,
dans lequel le moyen d'injection d'eau (19) est dépourvu de moyens de perforation pour ouvrir la paroi (4) de la capsule.

6. Le système de capsule (1) de boisson selon la revendication 3,
dans lequel le dispositif de production de boisson comprend un porte-capsule (14) pour supporter la capsule (1), le porte-capsule (14) étant conçu pour coopérer sélectivement avec l'organe enveloppant (11) de sorte qu'une capsule (1) supportée est étroitement enveloppée.

7. Le système de capsule (1) de boisson selon la revendication 6,
dans lequel le porte-capsule (14) comprend au moins un élément faisant saillie (15) adapté pour déchirer ou percer une face (4') de la capsule (1) pour libérer la boisson; ledit élément faisant saillie (15) étant placé dans une position décalée latéralement par rapport à la position de l'organe (3, 3') de déviation de direction de jet interieur lorsque la capsule (1) est placée en engagement étroit entre l'organe enveloppant (3, 3') et le porte-capsule (14).

8. Le système de capsule (1) de boisson selon la revendication 7,
dans lequel le porte capsule (1) comprend une pluralité d'éléments en relief (15) placés autour de l'organe (3, 3') de déviation de direction.

9. Le système de capsule (1) de boisson selon la revendication 1,
dans lequel l'insert rigide est supporté par une couche compactée solide d'ingrédients particuliers de sorte que l'insert (30) peut procurer une force antagoniste à l'effet de poussée de l'organe enveloppant.

10. Un procédé pour produire une boisson à partir d'une capsule (1) contenant des ingrédients dans un système de capsule de boisson selon l'une des revendications précédentes,
le procédé comprenant les étapes suivantes :
- insertion de la capsule (1) dans l'organe enveloppant (11),
- injection d'un liquide sous pression dans la capsule (1) et création de canaux intérieurs d'écoulement dans une première face (4) de la capsule (1) par déformation de la face (4) de la capsule (1) lorsque l'intérieur de la capsule (1) est mis sous pression par l'injection d'eau et,
- distribution de l'eau injectée avec l'aide des canaux d'écoulement définis par le profil déformé de la face (4) de la capsule.

11. Le procédé selon la revendication 10,
dans lequel les canaux intérieurs sont profilés dynamiquement dans au moins une face (4) de la capsule (1) par pression de la face (4) de la capsule (1) contre des moyens de profilage (12) d'un organe enveloppant (11) d'un dispositif de production de boisson.

12. Le procédé selon la revendication 11,
dans lequel les canaux intérieurs sont produits par l'effet de la pression interne dans la capsule pendant l'injection.

13. Le procédé selon l'une des revendications 10 ou 12,
dans lequel les canaux intérieurs dans une face de la capsule sont au moins partiellement générés lors de la fabrication de la capsule et avant son insertion dans un dispositif de production de boisson.
